# EUROPÄISCHE PATENTSCHRIFT

(11) **EP 2 329 948 B1**
(45) Veröffentlichungstag und Bekanntmachung des Hinweises auf die Patenterteilung: **07.08.2013**
(21) Anmeldenummer: 11001903.1
(22) Anmeldetag: 16.06.2009
(51) Int. Cl.: B32B 17/06, C01B 33/14, C09C 1/30, C09K 21/02

(54) **Materialien zur Herstellung lichtdurchlässiger Hitzeschutzelemente und mit solchen Materialien hergestellte Lichtschutzelemente sowie Verfahren zu deren Herstellung**
Materials for producing transparent heat protection elements and light protection elements produced using such materials, and method for the production thereof
Matériaux pour la fabrication d'éléments de protection thermique transparents, éléments de protection contre la lumière obtenus à partir de tels matériaux et procédé pour leur fabrication

(30) Priorität: 26.06.2008 WO PCT/CH2008/000292
(43) Veröffentlichungstag der Anmeldung: 08.06.2011
(62) Teilanmeldung aus: 09768688.5
(73) Patentinhaber: Gevartis AG, 6318 Walchwil (CH)
(72) Erfinder: SEIDEL, Horst, 6318 Walchwil (CH)
(74) Vertreter: Rüedi, Regula Béatrice

(56) Entgegenhaltungen:
- EP-A- 1 431 027
- EP-A- 1 561 728
- WO-A-2007/060203
- DE-A1- 19 720 269
- DE-A1-102004 031 785
- US-A- 3 655 578
- US-A- 4 162 169
- US-A- 5 137 573
- US-A- 5 508 321

## Beschreibung

### Hintergrund

Die Erfindung betrifft Materialien auf Silikatbasis zur Herstellung lichtdurchlässiger Hitzeschutzelemente mit mindestens zwei Trägerelementen und einer zwischen den Trägerelementen angeordneten Schutzschicht sowie ein Verfahren zur Herstellung von Hitzeschutzelementen umfassend eine solche Schutzschicht.

### Stand der Technik

Lichtdurchlässige Hitzeschutzelemente der oben genannten Art sind in verschiedenen Ausführungsformen bekannt und werden unter anderem als Bauelemente eingesetzt. Als Trägerelemente dienen zumeist Glasplatten, wobei jedoch auch andere lichtdurchlässige Materialien, wie zum Beispiel Kunststoffe, verwendet werden. Besonders hohe Ansprüche an den Hitzeschutz werden dabei an Bauelemente gestellt, welche in der Form von Verglasungen für Fassaden sowie als Abgrenzungen von Innen-Räumen, wie Trennwänden und Türen, bzw. im Schiffsbau und im Offshore eingesetzt werden. Aus der Publikation DE C3 19 00 054 sind hitzeisolierende lichtdurchlässige Verbundgläser bekannt, bei welchen zwischen zwei Glasflächen eine Schicht aus getrocknetem wasserhaltigem Alkalisilikat angeordnet ist. Bei Einwirkung von Hitze auf dieses Verbundglas, zum Beispiel bei einem Brandfall, schäumt die Schutzschicht aus Alkalisilikat auf, und das in der Alkalisilikatschicht enthaltene Wasser verdampft. Die Schutzschicht wird dadurch für die Wärmestrahlung undurchlässig und bildet für eine bestimmte Zeit einen wirksamen Schutz gegen den unerwünschten Wärmedurchgang. Obschon mindestens eine der Glasplatten zersplittert, haften die Glasteile an der aufgeblähten Schaumschicht. Zur Verbesserung des Hitzeschutzes werden mehrere Glasplatten und Schutzschichten aus Alkalisilikat hintereinander angeordnet.

Bei der Herstellung hitzeisolierender Verbundgläser wird entweder auf einer Seite einer Glasplatte eine dünne Schicht von Alkalisilikat in flüssiger Form aufgetragen und anschliessend durch Entzug des überschüssigen Wassers, zum Beispiel durch Wärmeeinwirkung, getrocknet, oder ein Alkalisilikat wird mit einer sauren Komponente, z.B. Kieselsäure, gehärtet (EP 0 620 781).

WO 2007/060203 beschreibt zwei Verfahren zur Herstellung von Hitzeschutzelementen deren Schutzschicht sich durch tiefen Wassergehalt auszeichnen. Das eine Verfahren umfasst die partielle Trocknung einer Alkalisilikat enthaltenden wässrigen Lösung oder eines Sols, das andere Verfahren die Härtung einer solchen Lösung oder eines Sols durch Zugabe von kolloidalem Siliziumdioxid. Die Alkalisilikat enthaltende wässrige Lösung oder das Sol kann entweder kommerzielles Wasserglas sein oder direkt hergestellt aus kolloidalem Siliziumdioxid und Alkalilauge.

Auch bereits bekannt ist die Aushärtung von mit einem Polyol stabilisiertem pyrogenem SiO₂ unter Einwirkung von Lauge, beispielsweise KOH (siehe DE 197 20 269).

Ebenfalls bereits bekannt ist die Vorbehandlung der Glasscheibe mit einem Primer, der die Ablösung der brandseitigen Glasscheibe von der Schutzschicht fördert und damit einen Abriss der Schutzschicht verhindert, was zu besserem Verhalten im Brandversuch führt. Beispielsweise beschreibt DE 197 31 416 solche übliche Primerschichten, die vor dem Auf- oder Einbringen der Schutzschicht auf das Glas appliziert werden.

In US 5,508,321 wird ein Silikongummi beschrieben, der eine Schaumschicht bildet und expandierbares, aufschäumendes Material, Polyorganosiloxan, hydratisiertes Alkalimetallsilikat und elastomeres Bindemittel auf Silikonbasis umfasst. Diese Zusammensetzung kann als Brandschutzmaterial um brennbare Rohre, wie Rohre aus PVC oder ABS, verwendet werden.

DE 10 2004 031 785 bzw. WO 2006/002773 beschreiben SiO₂ insbesondere pyrogenes SiO₂ enthaltende Dispersionen und ihre Herstellung.

US 3,655,578 beschreibt stabilisierte Kieselsole mit einer Oberfläche von 500-1500 m²/g. Die Stabilisierung erfolgt durch ein Stabilisatorsystem bestehend aus einer Base und einer nicht aromatischen organischen Verbindung, die aus Wasserstoff, Kohlestoff und Sauerstoff besteht und mindestens 2 OH oder Ethergruppen und gute Wasserlöslichkeit aufweist.

WO 2008/090333 wurde erst nach dem Prioritätstag der vorliegenden Erfindung veröffentlicht und beschreibt eine flammhemmende Aluminosilikat enthaltende Beschichtung, welche durch Trocknung ausgehärtet wird und zur Verhinderung eines pulvrigen Zustands nach Trocknung eine hochsiedende organische Verbindung, z.B. ein Silikonöl, enthält. WO 2008/091129 ist ebenfalls ein nach dem Prioritätsdatum veröffentlichtes Dokument. Dieses beschreibt eine flammhemmende Beschichtung von geschäumten Harzen, wie Polystyrol, auf Basis von Alkalisilikat und im alkalischen Bereich löslichem SiO₂-Pulver Diese Basiskomponente kann Zucker oder modifizierte Stärke und/oder Silikonöl und/oder Organosilan und/oder Borsäure oder Borat enthalten.

US 4,162,169 beschreibt anorganische Bindemittel, die durch Vermischen von Alkalisilikat mit SiO₂-Hydrogel und einem Silikonöl erhalten werden und US 5,137,573 offenbart eine Beschichtungsmasse umfassend kolloidales Siliziumdioxid, ein Organohydroxysilan und ein Lösungsmittel, welches Ethylenglykolmonobutylether enthält.EP 1 561 728 beschreibt hydrophobe Fällungskieselsäuren und deren Herstellung.

Obwohl die bekannten lichtdurchlässigen Hitzeschutzelemente in Bezug auf Hitze- und Brandschutz bereits hohen Anforderungen zu genügen vermögen, sind sie in Bezug auf die Verarbeitung und/oder die Herstellungskosten und/oder ihr Verhalten im Brandfall noch unbefriedigend und andere Hitzeschutzmaterialien haben keine oder mangelnde Lichtdurchlässigkeit bzw. Transparenz.

### Darstellung der Erfindung

Der Erfindung liegt deshalb die Aufgabe zu Grunde, ein lichtdurchlässiges Hitzeschutzelement zu schaffen, welches eine Schutzschicht mit hoher Alterungsbeständigkeit aufweist, die in einer bevorzugten Ausführungsform durch Vergiessen und ohne Trocknung herstellbar ist, und die eine gute Eigenfestigkeit sowie optimierte Haftung zu den angrenzenden Trägerelementen aufweist. In einer Ausführungsform der Erfindung zeichnet sich die Schutzschicht durch hohe Transparenz und Optik aus.

Sowohl die Herstellbarkeit durch Giessen und Trocknen, wie auch die Herstellbarkeit durch Vergiessen und anschliessendes Härten bedingt, dass die Ausgangsmasse für die Schutzschicht fliessfähig und im Falle der Härtung auch zum Eingiessen in Hohlräume geeignet sein muss, dass sie eine ausreichende Topfzeit aufweist und dennoch nach dem Beschichten oder Befüllen rasch zu einer Schutzschicht mit guten Brandschutzeigenschaften aushärtet.

Im Rahmen dieser Erfindung wurde ein Vorurteil überwunden, nämlich die Annahme, dass Fällungskieselsäure und Kieselsole aufgrund der anderen (Partikel)eigenschaften, wie höherer OH-Gruppendichte im Sol bzw. an der Oberfläche und weniger homogener Partikelgrössen der Primärteilchen, für die OH-Härtung nicht eingesetzt werden könnten. Diese Annahme hat sich nun als falsch herausgestellt. Fällungskieselsäure und/oder Kieselsol kann - sofern mittels Polyol, insbesondere Ethylenglykol und/oder Glycerin stabilisiert - sehr wohl eingesetzt werden, infolge der gefundenen, erhöhten Reaktivität aber speziell bevorzugt in Kombination mit einem Polymonoalkylsiloxan oder einem Polydialkylsiloxan (nachfolgend Siloxan) und/oder Kieselsol.

Wie bereits oben angesprochen wurde, war die Verwendung einer Fällungskieselsäure anstelle von pyrogenem SiO₂ aufgrund der unterschiedlichen Materialeigenschaften vor dieser Erfindung als unmöglich erachtet worden. Überraschenderweise hat sich nun gezeigt, dass die anderen Materialeigenschaften, insbesondere der erhöhte Anteil and Si-OH-Gruppen an der Oberfläche der Partikel und die allenfalls inhomogenere Partikelgrössenverteilung keine nachteilige Wirkung auf die fertige Schutzschicht ausüben. Ganz im Gegenteil. Erste Brandversuche zeigen verbesserte Brandschutzeigenschaften.

Der Vorteil der Verwendung von Fällungskieselsäure liegt unter anderem im wesentlich tieferen Preis. Allerdings hat die Herstellung einer homogenen Dispersion Probleme bereitet.

Erst nach diversen Versuchen, eine stabile Dispersion herzustellen, in der die SiO₂-Teilchen durch Polyol und KOH stabilisiert vorliegen, wurde ein Zugabeverfahren gefunden, welches geeignete Dispersionen ergibt.

Eine für die Herstellung einer Brandschutzschicht geeignete amorphe Fällungskieselsäure weist einen SiO₂-Gehalt von mindestens 98.5 Gew.-%, vorzugsweise mindestens 98.8 Gew.-%, insbesondere von mindestens 99.1 Gew.-%, und eine BET Oberfläche von etwa 20 bis etwa 100 m²/g. auf. Für Dispersionen mit SiO₂-Gehalt von ca. 35 bis ca. 42 Gew.-% kann ein BET von 80 bis 100 m²/g eingesetzt werden, für höher konzentrierte Dispersionen ein BET von 20 bis 80 m²/g. Die mittlere Primärteilchengrösse beträgt üblicherweise von 10 bis 70 nm, insbesondere von 20 bis 40 nm, wobei grössere mittlere Primärteilchengrössen eingesetzt werden können, vorausgesetzt, dass nach dem Aushärten alle Teilchen innerhalb der Teilchengrössenverteilung unterhalb des sichtbaren Spektrums liegt. Die Sekundärteilchengrösse des SiO₂ hat nur Einfluss auf die Härtungsgeschwindigkeit (kleinere Teilchen schnellere Härtung), nicht aber auf die Dispersion resp. die Schutzschicht selbst.

Dem Ausgangsmaterial für die Schutzschicht kann ein Entschäumer, ein innerer Primer und gegebenenfalls ein die Optik verbessernder und/oder die Viskosität der Dispersion bzw. der Schutzschicht vor Aushärtung erniedrigender und/oder deren Topfzeit verlängernder Zusatz, wie Ammoniak, zugesetzt werden. Der Entschäumer bewirkt, dass die Entgasung der Schutzschichten bei der Herstellung und nach dem Aufgiessen auf eine Glasscheibe oder dem Befüllen des Zwischenraums zwischen zwei Glasscheiben rascher erfolgt und/oder dass die Bläschen so klein sind, dass sie während des Trocknungs- resp. Härtungsvorganges verschwinden, d.h. visuell nicht mehr wahrnehmbar sind. Ein Primer bewirkt, dass die Haftung der Schutzschicht an der brandseitigen Glasscheibe vermindert wird, so dass es im Brandfall zu einer grossflächigen Ablösung der Schutzschicht von der Glasscheibe unter Vermeidung von Abrissen führt.

Dank der Verwendung eines inneren Primers kann auf die vorgängige Primerbehandlung der Glasscheiben verzichtet werden.

Überraschenderweise wurde nun gefunden, dass gewisse siliziumhaltige Verbindungen in Schutzschicht-Zusammensetzungen als Entschäumer und Primer wirken, ohne sich negativ auf die Endeigenschaften der Schutzschicht auszuwirken.

Insbesondere handelt es sich bei solchen Verbindungen um Polymonoalkylsiloxane oder Polydialkylsiloxane mit kurzen Alkylgruppen, beispielsweise linearen oder verzweigten C1 bis C4 Alkylgruppen, mit 5 bis 350 Monomereinheiten, vorzugsweise 15 bis 350 Monomereinheiten, insbesondere 90 bis 350 Einheiten, wobei bei linearen Siloxanen die Polymerkette an einem oder beiden Enden (in α- und/oder ω-Stellung) mit Alkyl- insbesondere Methylgruppen oder gegebenenfalls mit anderen organischen Resten substituiert sein kann. Ein speziell bevorzugtes Siloxan ist Polydimethylsiloxan (auch Poly[oxy(dimethylsilylen)] oder α-(Trimethylsilyl)-ω-methylpoly[oxy(dimethylsilylen)]) (Mw von 1000 bis 25000, vorzugsweise 6000 bis 25000, insbesondere von 10000 bis 20000, Dichte 0.90 bis 0.98 g/cm³, insbesondere um 0.98 g/cm³). Solche Siloxane können gleichzeitig als Entschäumer und innerer Primer wirken. Sie können einzeln oder als Mischung eingesetzt werden. Geeignete Polydimethylsiloxane sind auch bekannt unter den Namen Dimeticon bzw. Dimethicon, Polysilane, E 900 und Siliconöl. Geeignete Polydimethylsiloxane sind beispielsweise erhältlich von Dow Corning Corporation in Midland, Michigan, USA; Bayer Industrieprodukte GmbH & Co. KG, Leverkusen, DE; Wacker-Chemie GmbH, München, DE und Acros Organics, Belgien um nur einige zu nennen.

Durch diese Erfindung mit umfasst sind die Ammoniumsalze der Polysiloxane, gegebenenfalls zusammen mit freiem Ammoniak.

Die Entschäumerwirkung solcher Verbindungen ist, z.B. aus der Medizin, bekannt, nicht bekannt ist aber deren Einsetzbarkeit als Entschäumer in für die Herstellung von Schutzschichten geeigneten Zusammensetzungen, geschweige denn ihre gleichzeitige Wirkung als innerer Primer.

Es wird - ohne dass der Anmelder an irgendeine Theorie gebunden sein will - angenommen, dass die Wirkung als innerer Primer zumindest teilweise auf der bekannten Affinität von Glasoberflächen gegenüber Siloxanen beruht, so dass die Siloxane infolge Diffusion an der Glasoberfläche aufkonzentriert werden und - infolge der Siloxangruppen - die Konzentration der für die Haftung der Schutzschicht verantwortlichen Oberflächengruppen reduzieren resp. die Ablösung im Brandfall fördern. Zusätzlich fördern die Entschäumereigenschaften im glasnahen Bereich der Schutzschicht den Austritt von Gas (z.B. des bei Hitzeeinwirkung gebildeten Wasserdampfs), so dass sich dieses bevorzugt zwischen der Glasscheibe und der Schutzschicht ansammelt und die grossflächige Ablösung zusätzlich begünstigt.

Schutzschicht-Zusammensetzungen, welchen ein Entschäumer und/oder Primer wie oben beschrieben vorteilhafterweise zugesetzt werden kann, sind SiO₂-Dispersionen gemäss Anspruch 1, welche mit KOH verfestigt werden können. Bei diesen Zusammensetzungen bewirkt ein Siloxan eine bessere Entgasung und damit eine raschere Verarbeitung bzw. eine kürzere Verarbeitungszeit.

Die ausgehärteten Schutzschichten zeichnen sich ferner durch gegenüber analogen Schutzschichten ohne Siloxan verbesserte Brandeigenschaften aus.

Bevorzugte Schutzschichten haben im ausgehärteten Zustand ein Molverhältnis von Siliziumdioxid zu Alkali-Metalloxid welches grösser als 4:1 ist. Dieses Molverhältnis kann ein Polysilikat charakterisieren oder eine Mischung aus Polysilikat mit darin eingeschlossenen nanoskaligen, d.h. für das Auge unsichtbaren Siliziumdioxid-Teilchen. Der Wassergehalt solcher verfestigter Schichten liegt vorzugsweise im Bereich von 35 Gew.-% bis 60 Gew.-%, der Gehalt an Siliziumdioxid im Bereich von 30 bis 55 Gew.-% und der Gehalt an Alkali-Metalloxid (M₂O), ausgewählt aus der Gruppe bestehend aus Natriumoxid, Kaliumoxid, Lithiumoxid und Mischungen derselben, beträgt vorzugsweise maximal 16 Gew.-%.

Für die Stabilisierung der pyrogenen oder gefällten Kieselsäure und/oder des Kieselsols eignen sich Polyole, wie Ethylenglykol, Propylenglykol und Glycerin.

Verfestigt werden können solche stabilisierten Kieselsäuren durch Laugenzugabe, wie z.B. NaOH, KOH etc., wobei KOH gegenüber NaOH bevorzugt ist.

Das Siloxan kann entweder der silikat- bzw. siliziumdioxidhaltigen Komponente oder der Härterkomponente, der Kalilauge, zugegeben werden. Als Härterkomponente werden jene Verbindungen bzw. Zusammensetzungen bezeichnet, die nach Zugabe zu einer Verfestigung der Schicht führen. Da es gerade bei Verwendung von SiO₂-Partikel-Dispersionen vorteilhaft ist, bereits diese zu entgasen, wird das Siloxan vorzugsweise der SiO₂-Dispersion zugesetzt. Ebenfalls möglich aber zumindest derzeit für Dispersionen ohne Kieselsäurezusatz nicht bevorzugt wäre Beigabe des Siloxans während des Vermischens der Dispersion mit der Härterkomponente. Da bei Mischungen aus z.B. Fällungskieselsäure und Kieselsol Entgasung der SiO₂-haltigen Dispersion oft nicht erforderlich ist, kann das Siloxan - sofern verwendet - der Dispersion und/oder der Kalilauge zugesetzt oder während des Mischens dieser beiden Komponenten als dritte Komponente zugegeben werden.

Die Menge an Siloxan, das zugegeben wird, entspricht etwa einer Menge von 0.1 bis 10 Gew.-%, für transparente Gläser insbesondere 0.5 bis 3 Gew.-%, speziell bevorzugt 0.5 bis 2.5 Gew.-% bezogen auf die Masse der ausgehärteten Schicht. Für lichtdurchlässige aber nur teil- oder nicht-transparente Gläser kann das Siloxan in Mengen bis 10 Gew.-% eingesetzt werden.

Eine gut geeignete SiO₂-Dispersion zur Verfestigung mittels Laugenzugabe besteht aus:
35-52 Gew.-% SiO₂
30-50 Gew.-% Wasser
0.5-0.7 Gew.-% KOH
0-13 Gew.-% Alkylsiloxan
0-6 Gew.-% Ammoniak (32%-ige wässrige Lösung) Rest Glycerin und/oder Ethylenglykol, beispielsweise
47.0 - 48.5 Gew.-% SiO₂
33.8 - 30.9 Gew.-% Wasser
0.6 ± 0.1 Gew.-% KOH
0-10 Gew.-% Alkylsiloxan
0-2.5 Gew.-% Ammoniaklösung (32 Gew.-% in Wasser)
Rest Glycerin und/oder Ethylenglykol, wobei mindestens 5 Gew.-% Glycerin und/oder Ethylenglykol enthalten sind.

Derzeit bevorzugte Dispersionen umfassen:
47.0 Gew.-% SiO₂
32.8 Gew.-% Wasser
0.6 Gew.-% KOH
0.5-3 Gew.-% Alkylsiloxan, insbesondere Polydimethylsiloxan,
0-0.5 Gew.-% Ammoniak (32%-ige wässrige Lösung) Rest Glycerin und/oder Ethylenglykol oder
48.2 Gew.-% SiO₂
30.9 Gew.-% Wasser
0.5 Gew.-% KOH
0.5-3 Gew.-% Alkylsiloxan, insbesondere Polydimethylsiloxan,
0-0.5 Gew.-% Ammoniak (32%-ige wässrige Lösung)
Rest Glycerin und/oder Ethylenglykol.

Das Polyol, insbesondere Glycerin bzw. Ethylenglykol, und KOH dienen zur Stabilisierung der SiO₂ Teilchen in der Dispersion und zur Erniedrigung des Gefrierpunktes. Sofern das Polyol nur der Stabilisierung dient, nicht aber auch der Gefrierpunktserniedrigung, kann mit geringerem Polyolgehalt und höherem Wassergehalt gearbeitet werden.

Aufgrund seiner Stabilisierungsfunktion sollte das Polyol in Mengen von mindestens 5 Gew.-% vorhanden sein, vorzugsweise in Mengen von mindestens 8 Gew.-%, speziell bevorzugt in Mengen von 10 bis 20 Gew.-%.

Ein SiO₂-Gehal um 45 bis 50 Gew.-% hat sich als vorteilhaft herausgestellt, da bei einem solchen Gehalt eine ausreichende Menge KOH als Lösung zugemischt werden kann und trotzdem noch hochkonzentrierte Schutzschichten erhältlich sind. Konzentrationen bis 52 Gew.-% sind möglich, wobei ab ca. 49 bis 50 Gew.-% hohe Anforderungen an die Dispergiergeräte gestellt werden.

Ammoniak kann in der Schutzschicht zur Verbesserung, beispielsweise der Eigenschaften, in absoluten Mengen (d.h. berechnet als NH₃ 100%) von ca. 0.1 bis max. ca. 2 Gew.-%, vorzugsweise max. ca. 0.8 bis 0.9 Gew.-% der Dispersion und/oder dem Härter zugesetzt werden, gegebenenfalls teilweise oder vollständig gebunden an das Polysiloxan.

In der SiO₂-Dispersion haben sich Mengen bis zu etwa 6 Gew.-% wässrige Ammoniaklösung (32 Gew.-%), insbesondere bis zu etwa 2.5 Gew.-% wässrige Ammoniaklösung (32 Gew.-%), und Mindestmengen von 0.1 Gew.-%, vorzugsweise 0.5 Gew.-% wässrige Ammoniaklösung (32 Gew.-%) als geeignet erwiesen.

Gut geeignet für die Herstellung der Dispersion ist ein differenziertes Zeit und Temperaturprofil, umfassend:
i) Vorlegen von Wasser, mindestens eines Teils der KOH und mindestens eines Teils des Polyols
ii) kontinuierliche Zudosierung von SiO₂.

Da die Dispersion während des Dispergierens bei Temperaturen über 40°C rasch die Verarbeitbarkeit verliert, ist Kühlen auf < 40°C angezeigt.

Als gut geeignet für die grosstechnische Herstellung einer erfindungsgemässen Dispersion haben sich folgenden Betriebsmittel und die folgende Verfahrensvorschrift erwiesen:

### Betriebsmittel:

1) Doppelwandiger Rührbehälter, vakuumfest mit einem Kühlmantel und einem Rührwerk, beispielsweise einem langsam drehenden Ankerrührwerk mit einem Antriebsmotor von 2 bis 10 kW Rührleistung, einstellbar auf Umdrehungszahlen von 1 bis 85 U/min.
2) Mantelkühlung, z.B. Kühlaggregat
3) Mantelheizung, z. B. Heisswasser- oder Dampferzeuger
4) Vakuumpumpe, insbesondere Vakuumpumpe, die bis etwa 100 mbar, vorzugsweise < 100 mbar, insbesondere ≤ 70 mbar Vakuum erzeugen kann, z.B. Wasserringpumpe ,Öldrehschieberpumpe oder Vakuumventuripumpe
5) Zumischungseinheit, insbesondere Inlinehomogenisator mit Zuführungseingang für Pulver oder eine Nanokugelmühle, z.B. Nanomühle ZETA® RS, mit Flüssigkeits- und Pulverzuführung

In dem Falle, in dem ein Inlinehomogenisator verwendet wird, kann zusätzlich eine Nanokugelmühle in den Dispersionskreislauf eingebracht werden.

Für einen Rührbehälter von 200 1 Volumen eignet sich ein Doppelmantel mit 50 1 Volumen und eine Durchflussgeschwindigkeit des Heiz- resp. Kühlmittels von 40 1/min.

### Verfahrensvorschrift:

Wasser, mindestens einen Teil des Polyols, Siloxan und mindestens einen Teil der KOH im Mischbehälter vorlegen. Angestrebter pH-Wert > 10,5. Behälter auf ca. 40°C heizen und Inhalt mischen, beispielsweise bei 50 U/min. während etwa 10 min. Anschliessend Flüssigkeitsphase unter Rühren über einen Dispergierapparat, insbesondere einen Inlinehomogenisator oder gegebenenfalls eine Nanokugelmühle, im Kreislauf pumpen. Der Dispergierapparat ist vorzugsweise so ausgelegt, dass die Zugabe von SiO₂ kontinuierlich über diesen Dispergierapparat erfolgte, insbesondere derart, dass durch einen Seitenkanal kontinuierlich Pulver in den Flüssigkeitsstrom gezogen und mit der Dispergiervorrichtung (konisch zulaufendes doppelwandiges Dispergierwerkzeug im Homogenisator oder Kugeln in der Nanokugelmühle) unter Zermahlen eindispergiert wird. Die Dispersion wird auch nach erfolgter Zugabe des SiO₂ weiter im Kreislauf über den Dispergierapparat gepumpt, bis die Stromaufnahme konstant ist, üblicherweise bei etwa 35 A. Da die Temperatur infolge des Energieeintrags steigt, wird die Reaktortemperatur während des Eindispergierens durch Kühlen auf etwa 40 °C gehalten. Anschliessend wird die Dispersion unter Vakuum gerührt, beispielsweise während einer Zeit von 2 bis 4 h bei 40 °C mit 5 U/min, je nach Konzentration der Dispersion. Anschliessend wird der Reaktor auf 20 °C hinuntergekühlt und - falls notwendig - der pH Wert mit KOH auf etwa 10,5 - 10,9 eingestellt. Die Dispersion kann, vorzugsweise unter Filtration durch 100 µm Beutelfilter, abgefüllt werden, insbesondere in Kunststoffgebinde, wie IBC-Gebinde.

Entgasung der Dispersion ist nicht absolut notwendig, optimiert aber die Qualität der Dispersion für die Lagerung und die Weiterverarbeitung.

Eine Dispersion mit verminderter Viskosität wird erhalten, wenn das Glycerin in zwei Portionen, eine vor Beginn der Einarbeitung von SiO₂ eine nach erfolgter Dispergierung, zugegeben wird. Daraus folgt auch, dass die Glycerinmenge in der Dispersion in gewissen Bereichen variiert werden kann, ohne die Herstellbarkeit zu gefährden. Beispielsweise kann die Menge an Polyol zugunsten des Siloxans reduziert werden, wobei eine Mindestmenge Polyol von 5 Gew.-%, vorzugsweise 8 Gew.-%, insbesondere 10 bis 20 Gew.-% vorhanden sein sollte, sofern eine Dispersion von SiO₂-Partikel eingesetzt wird.

Eine weitere oder zusätzliche Möglichkeit zur Verminderung der Viskosität und gegebenenfalls zur Erhöhung der Topfzeit ist die Zugabe von Ammoniak und/oder Kieselsol.

Eine Dispersion mit optimierten Teilchengrössen kann erhalten werden durch den Einsatz von beispielsweise einer Nanokugelmühle innerhalb des Dispersionskreislaufs, sei es im Bereich der Zumischung des SiO₂ oder dieser Zumischung vor- und/oder nachgeschaltet.

Vor Weiterverarbeitung wird eine entsprechend hergestellte Dispersion vorzugsweise während bis zu ca. 14 Tagen bei 20 bis max. 25°C gelagert. Eine solche Lagerung führt zu besser definierten Materialien. Was genau bei der Lagerung passiert ist nicht klar. Ohne an eine Theorie gebunden zu sein könnte eine Homogenisierung der SiO₂-Teilch erfolgen, nach der Regel dass in Dispersionen grössere Teilchen auf Kosten kleinerer Teilchen wachsen, wahrscheinlich aber erfolgt eine Reduktion aktiver Radikale und eine Verschiebung im Verhältnis von Siloxanzu Silanol-Gruppen.

Eine solche Dispersion kann durch Zugabe von KOH ausgehärtet werden, beispielsweise bei 70-80°C während 8-10 Stunden. Die Konzentration der KOH kann variiert werden, so dass in der Endzusammensetzung der gewünschte Wassergehalt resultiert.

Die Herstellung der Schutzschicht-Dispersion (Schutzschicht) und die Aushärtung kann mit den nachfolgenden Parametern erfolgen:

### Zusammensetzung:

75 ± 5 Gew-% Dispersion
25 ± 5 Gew-% KOH (50%)

### Betriebsmittel:

Analog 1) bis 4), wie oben im Zusammenhang mit der Herstellung der Dispersion beschrieben.

### Verfahrensanleitung:

Die Dispersion wird im Reaktor vorgelegt und das Rührwerk eingeschaltet, beispielsweise bei etwa 50 U/min. Die Kalilauge wird unter Rühren beigegeben, wobei eine hochviskose, cremigen Masse entsteht. Während des Rührens erfolgt ein Temperaturanstieg, vorzugsweise auf 45-60°C, insbesondere ca. 55°C. Falls die Mischungswärme nicht ausreicht, kann aktiv geheizt werden. Bei Erreichen des Temperaturmaximums (meist etwa 45 bis 60°C nach ca. 15 min; sofern die Exothermie des Mischvorgangs nicht ausreicht, kann geheizt werden) wird diese Temperatur 15-45 min gehalten, bis die Viskosität sinkt, üblicherweise auf ca. 50 mPas. Dann wird auf 40 - 45 °C gekühlt.

Anschliessend wird der Reaktor dicht verschlossen und ein Vakuum angelegt, vorzugsweise ein Vakuum von < 100 mbar, insbesondere etwa 50 bis 90 mbar absolut, die Temperatur auf Siedetemperatur, im obigen Vakuumbereich ca. 42 bis 45 °C, gehalten, damit die Mischung siedet und Luftblasen heftig an die Oberfläche getrieben werden und zerplatzen. Die Viskosität steigt etwa auf 150 - 250 mPas. Während des Entgasens wird die Rührgeschwindigkeit vermindert, üblicherweise auf ca. 5 U/min. Die Siedetemperatur unter Vakuum wird während einer ausreichend langen Zeitspanne, üblicherweise 15 - 45 min gehalten, damit der Reaktorinhalt siedet und die im Material enthaltene Luft als Gasblasen ausgetrieben wird. Anschliessend wird der Reaktor, um die Verarbeitbarkeitsdauer nicht unnötig zu verkürzen, mit Kühlwasser und so schnell wie möglich, auf 20 - 25 °C hinuntergekühlt. Dank des schnellen Abkühlens kann mit einer Verarbeitungsdauer des Materials gerechnet werden, die noch etwa 3 h beträgt (bei 55°C ca. 2 bis 2.5 Std.). Vorzugsweise wird während etwa 1 h-1.5 h bei 20-25 °C unter Rühren bei 5 U/min weiter evakuiert um Blasenfreiheit zu gewährleisten. Dann werden das Rührwerk und die Vakuumpumpe ausgeschaltet, worauf der Reaktor entlüftet, entleert und vorzugsweise unverzüglich gereinigt werden kann. Die entnommene Mischung kann zum Verfüllen von Feuerschutzelementen benutzt werden.

Eine solche Schutzschicht-Dispersion ergab nach Aushärten blasenfreie, transparente Schutzschichten mit ausgezeichnetem Verhalten im Brandversuch.

Analog kann auch ein Kieselsol eingesetzt werden, wobei dieses in Abhängigkeit der Anfangskonzentration gegebenenfalls noch durch Wasserentzug aufkonzentriert werden muss.

Ein geeignetes Herstellungsverfahren ausgehend von Kieselsol umfasst die folgenden Verfahrensschritte:

### Verfahrensanleitung:

Vorlegen von Kieselsol, Zugabe von Polyol und gegebenenfalls Siloxan und Rühren bis zur homogenen Mischung. Falls höhere Konzentration an SiO₂ gewünscht ist, kann unter Rühren auf etwa 45 - 60 °C, beispielsweise 45 - 50 °C aufgeheizt, Vakuum angelegt (vorzugsweise ca. 50 - 90 mbar) und der Mischung unter Vakuum, durch Sieden, die gewünschte Menge Wasser entzogen werden. Anschliessend wird der Kieselsol enthaltenden Mischung Kalilauge zugegeben und die resultierende Mischung gerührt, während sie zu einer hochviskosen Creme reagiert. Durch die Reaktion steigt die Temperatur auf etwa 45 - 50°C. Falls gewünscht kann die Temperatur durch Heizen auf 50 - 60 °C gebracht werden, vorzugsweise ca. 55°C. Dabei sinkt die Viskosität nach etwa 15 - 30 min auf etwa 20 - 50 mPas. Nach etwa 15 - 45 min wird auf etwa 40 - 45 °C gekühlt (geeignete Rührgeschwindigkeit etwa 10 U/min), der Reaktionskolben vakuumdicht gemacht und ein Vakuum von < 100 mbar angelegt. Für ein Vakuum von etwa 50 - 90 mbar eignet sich eine Temperatur von 40 - 45 °C um das Sieden des Reaktorinhalts sicherzustellen. Für das Rühren unter Vakuum hat sich eine Dauer von ca. 15 - 30 min als geeignet erwiesen um die im Material befindliche Luft auszutreiben. Danach wird die Mischung sehr schnell auf 20 - 25°C gekühlt, um die Aushärtung zu verlangsamen. Es wird eine Verarbeitungsdauer (Topfzeit) von 6 h erhalten. Das Vakuum wird vorzugsweise bei 20-25°C noch während etwa 60 min beibehalten, um Blasenfreiheit zu gewährleisten. Die Viskosität steigt wieder an, üblicherweise auf etwa 50 - 100 mPas. Bei Reaktionsende werden der Rührer und die Vakuumpumpe ausgeschaltet und der Reaktioriskolben entlüftet.

Eine derart erzeugte Mischung eignet sich zum Verfüllen von Feuerschutzelementen. Die Anfangsviskosität von 50 - 100 mPas steigt im Laufe der Zeit langsam an, weshalb die Topfzeit auf etwa 6 h beschränkt ist.

Durch den Einsatz eines Siloxans mit Entschäumerwirkung (Oberflächenspannung reduzierend) und Primerwirkung, welcher zudem die optischen Eigenschaften nicht beeinträchtigt, gegebenenfalls zusammen mit Ammoniak, können die Verarbeitbarkeit und die Qualität der Schutzschicht, sei sie aus einer Dispersion oder Kieselsol hergestellt, erhöht werden.

Die oben beschriebenen Dispersionen und Sole können auch in Kombination verwendet werden. Je nach Feststoffgehalt im Sol und der Partikelgrösse des Sols lassen sich die Eigenschaften der Schutzschicht steuern. So hat beispielsweise reines Kieselsol (z.B. 50m²/g, 50 % SiO₂-Gehalt eine tiefe Viskosität, die für die Verarbeitung sehr gut ist, es ergibt eine gute Verarbeitungszeit (Topfzeit)(siehe unten) aber eine zu geringe Feuerwiderstandszeit. Durch Zumischung von Fällungskieselsäure oder pyrogener Kieselsäure lässt sich die Feuerwiderstandszeit optimieren.

Beispielsweise lässt sich die Topfzeit in Abhängigkeit des Verhältnisses von Kieselsäuredispersion zu Kieselsol in weiten Bereichen variieren. Für eine Zusammensetzung aus Fällungskieselsäuredispersion wie oben beschrieben und alkalisch stabilisiertem Kieselsol (50m²/g, 50 Gew.-% SiO₂-Gehalt wurde eine Verlängerung der Topfzeit mit zunehmendem Kieselsolgehalt gefunden (siehe Tabelle 1).

**Tabelle 1**

| Dispersion aus Fällungskieselsäure | Kieselsol (50m²/g, 50 % SiO₂-Gehalt) | Topfzeit bei 55°C |
|---|---|---|
| [%] | [%] | [Std.] |
| 0 | 100 | >6 |
| 25 | 75 | 5-6 |
| 50 | 50 | 5 |
| 75 | 25 | 4 |
| 100 | 0 | 2-2.5 |

Eine Mischung aus Fällungskieselsäure-Dispersion und Kieselsol hat den weiteren Vorteil, dass sie sich rascher und/oder bei geringerem Vakuum entgasen lässt als eine reine Fällungskieselsäure-Dispersion. Insbesondere kann auch das Entgasen der Dispersion vor dem Vermischen mit der Kalilauge entfallen. Das Entgasungsverhalten wird durch die Zugabe des erfindungsgemässen Entschäumers, insbesondere PDMS, noch weiter begünstigt.

Die Eigenschaften, z.B. Verfestigung durch Gelbildung, eines Kieselsols sind stark abhängig von der Partikelgrösse. So geliert Kieselsol mit grosser Oberfläche bei Electrolytzugabe rascher als Kieselsol mit kleinerer Oberfläche.

Um die gewünschten Verarbeitungs und Endeigenschaften zu erhalten kann es deshalb vorteilhaft sein, Mischungen von Kieselsolen mit unterschiedlicher Oberfläche zu verwenden, insbesondere auch aus Stabilitätsgrünen, da sich Kieselsole mit grösseren Oberflächen weniger gut aufkonzentrieren lassen als solche mit kleineren Oberflächen.

Handelsübliche Kieselsole, wie etwa Levasil der Fa. H. C. Starck in Leverkusen, Deutschland, sind - um die gewünschte Stabilität zu erzielen - sauer oder alkalisch stabilisiert und je nach Partikelgrösse mehr oder weniger hoch konzentriert. Im Rahmen der vorliegenden Anmeldung sind insbesondere die alkalisch stabilisierten Kieselsole wichtig, insbesondere Kieselsole, die mit KOH und/oder gegebenenfalls Ammoniak stabilisiert sind. Da für die Zwecke der vorliegenden Erfindung hochkonzentrierte Dispersionen bzw. Sole wesentlich sind, müssen die handelsüblichen Sole meist aufkonzentriert werden. Dies kann - wie oben beschrieben - z.B. dadurch erfolgen, dass zur weiteren Stabilisierung zuerst Polyol, wie Glycerin und Ethylenglykol, zugesetzt wird und das Sol anschliessend unter Verdampfung von Wasser aufkonzentriert wird.

Eine Dispersion aus einer SiO₂-Partikel z.B. Fällungskieselsäure, enthaltenden Dispersion und Kieselsol kann durch Vermischen der beiden Dispersionen bei Temperaturen unter 60°C und bei hoher Scherwirkung und Rührgeschwindigkeit, z.B. in einer Dispergiervorrichtung, hergestellt werden.

Das Verfahren zur Herstellung eines lichtdurchlässigen Hitzeschutzelementes unter Verwendung einer Dispersion und/oder eines Sols, wie oben beschrieben, zeichnet sich dadurch aus, dass die Dispersion bzw. das Sol mit Kaliumhydroxid-Lösung versetzt und verfestigt wird. Vorzugsweise erfolgt die Verfestigung ohne Wasserentzug. In diesem Falle wird die Dispersion nach Versetzen mit Kalilauge in einen Formhohlraum eingebracht und anschliessend unter Erhaltung des Wassergehaltes zu einer festen Schutzschicht - vorzugsweise bei erhöhter Temperatur - ausgehärtet. Das Molverhältnis von Siliziumdioxid zu Alkali-Metalloxiden in der Schutzschicht ist vorzugsweise grösser als 4:1.

Das erfindungsgemässe Verfahren ermöglicht somit das direkte Herstellen von Verbundelementen, welche aus mehreren mit einem Abstand zueinander angeordneten Trägerelementen, z.B. Glasscheiben, bestehen. Insbesondere können zur Erreichung von höheren Hitzewiderstandswerten direkt Hitzeschutzelemente gebildet werden, bei welchen das Hitzeschutzelement aus mehreren jeweils zwischen zwei Trägerelementen angeordneten Schutzschichten besteht und die Trägerelemente und die Schutzschichten ein Verbundelement bilden. Dabei werden jeweils zwei Trägerelemente miteinander in einem Abstand verbunden, so dass ein gewünschter Zwischenraum definiert wird. Dieses Verbinden kann beispielsweise mittels einer Butyl- und Silikonmasse, Polysulfit, Hotmelt oder einem schnell härtenden Kautschukpolymer erfolgen, wobei eine für das Eingiessen der Schutzschicht notwendige Öffnung ausgespart wird. Anschliessend wird der Zwischenraum zwischen den Trägerelementen mit der giessfähigen Schutzschicht-Masse gefüllt und die Öffnung verschlossen.

Vorzugsweise wird die Schutzschicht-Masse vor dem Verarbeiten entgast. Dadurch wird sichergestellt, dass in der verfestigten Schutzschicht keine Gaseinschlüsse vorhanden sind, welche die optische Qualität des erfindungsgemässen Hitzeschutzelementes stören könnten.

Zur Steigerung der Qualität der Schutzschicht wird entweder der siliziumdioxid- bzw. silikathaltigen Zusammensetzung und/oder dem Härter vor dem Zusammenmischen der Schutzschicht-Masse ein Siloxan beigegeben. Dadurch kann auf eine Vorbehandlung der Trägerelemente mit einem Primer verzichtet werden. Allerdings liegt es im Rahmen dieser Erfindung zusätzlich zur Verwendung eines inneren Primers oder anstelle eines inneren Primers (z.B. wenn der Entschäumer keine oder schlechte innere Primer-Wirkung entfaltet oder allenfalls kein Entschäumer zugesetzt wird) einen äusseren Primer zu verwenden. Eine solche (äussere) Primerschicht wird im Rahmen der vorliegenden Erfindung als Hilfsschicht bezeichnet.

Als Trägerelemente für das erfindungsgemässe lichtdurchlässige Hitzeschutzelement sind nicht nur Elemente aus Glas, insbesondere Glasplatten, sondern auch andere Werkstoffe mit den gewünschten optischen Eigenschaften geeignet, sofern sie den technischen und physikalischen Anforderungen, zum Beispiel an die Hitzebeständigkeit, genügen. Der Widerstandswert der Hitzeschutzschicht wird in jedem Falle durch einen hohen Wassergehalt und das Siloxan verbessert. Als Trägermaterial kann auch ganz oder teilweise, thermisch oder chemisch vorgespanntes Glas verwendet werden.

Die verfestigten Schutzschichten sind von hoher optischer Qualität und Durchlässigkeit und weisen gute Alterungsbeständigkeit und Brandschutzeigenschaften auf.

### Weg(e) zur Ausführung der Erfindung

Die folgenden Beispiele veranschaulichen die vorliegende Erfindung.

### Beispiel 1:

### Einfluss der Glycerinzugabe auf die Viskosität einer Dispersion

Zusammensetzung:
48.2 Gew.-% SiO₂
19.6 Gew.-% Glycerin
31.6 Gew.-% Wasser
0.6 Gew.-% KOH

### Herstellung Ansatz 1 (ca. 20 Liter):

1 Stadtwasser und Glycerin vorlegen
2 Kalilauge einrühren
3 SiO₂ (Fällungskieselsäure) einrühren
4 Mit Turrax 3 min homogenisieren (IKA 10'000UPM)
5 über 5 µm Filtersack abfüllen
6 Standardmuster ziehen

### Herstellungsparameter:

- Temperatur beim Einmischen und Dispergieren: 25°C
- Dispergierdauer, im Kreislaufsystem: 60 min
- Zeitspanne zwischen Dispergieren und Entgasen: 5 min.
- Manteltemperatur beim Entgasen: 40°C
   Dauer der Entgasung: 20 min.
   Druck während dem Entgasen: 50 mbar
   Kühlen nach dem Entgasen auf: 10°C
   Filtrieren durch kleinstmöglichen Filter

### Herstellung Ansatz 2 (Parameter analog Ansatz 1):

1 Stadtwasser und Glycerin Menge I vorlegen
2 Kalilauge einrühren
3 SiO₂ (Fällungskieselsäure) einrühren
4 Glycerin Menge II einrühren
5 Mit Turrax 3 min homogenisieren (IKA 10'000UPM)
6 über 5 µm Filtersack abfüllen
7 Standardmuster ziehen

| **Einsatzstoff** | | **Ansatz 1** | | **Ansatz 2** | | **Soll** |
|---|---|---|---|---|---|---|
| | | **[kg]** | **[%]** | **[kg]** | **[%]** | **[%]** |
| Stadtwasser | | 9.60 | 33.07 | 9.60 | 32.99 | 33.07 |
| Glycerin | Menge I | 5.63 | 19.39 | 2.20 | 19.52 | 19.41 |
| | Menge II | --- | | 3.48 | | |
| Kalilauge | | 0.30 | 1.03 | 0.30 | 1.03 | 0.99 |
| SiO₂ | | 13.50 | 46.50 | 13.52 | 46.46 | 46.53 |

| **Parameter** | | **Ansatz 1** | **Ansatz 2** | **pyrogenes SiO₂** |
|---|---|---|---|---|
| Glührückstand [Gew.-%] | | 45.5 | 45.3 | 48.3 |
| pH-Wert (Original) | | 10.6 | 10.6 | 10.8 |
| Viskosität (Brookfield), -20°C [mPas] | | 205 | 140 | 233 |
| Dichte (20°C) [g/ml] | | 1.4203 | 1.4195 | 1.450 |
| Trockensubstanz (105°C) [Gew.-%] | | 62.1 | 61.3 | 65.0 |
| Messung mit RFA | SiO₂ | 45.0 | 44.7 | 47.9 |
| [Gew.-%] (Schmelzaufschluss) | K2O | 0.3 | 0.3 | 0.4 |

### Beispiel 2

### Herstellung einer Dispersion aus Fällungskieselsäure

### Betriebsmittel:

### Allgemein benötigte Betriebsmittel:

Doppelwandiger Rührbehälter, vakuumfest mit einem Kühlmantel und einem Rührwerk, beispielsweise einem langsam drehenden Ankerrührwerk mit einem Antriebsmotor von 5 bis 10 kW Rührleistung

### Kühlaggregat zum Kühlen des Reaktormantels

### Heisswasser- oder Dampferzeuger zum Heizen des Reaktormantels

Vakuumpumpe, die bis etwa 100 mbar, vorzugsweise < 100 mbar Vakuum erzeugen kann, z.B. Wasserringpumpe Öldrehschieberpumpe oder Vakuumventuripumpe

### Inlinehomogenisator und/oder Kugelmühle

Konkret eingesetzte Betriebsmittel:
- *Rührbehälter Vakuumfest mit einem*

### Kühl/Heizmantel:

Es wurde ein Rührbehälter aus Edelstahl V4A mit einem Volumen von 200 Litern und Doppelmantel eingesetzt. Der Rührbehälter benötigt eine vakuumfeste Bauweise, damit er sich nicht unter Vakuumeinwirkung zusammenzieht. Der Doppelmantel dient dem Durchfluss von Heiz-/Kühlwasser und fasst bei einem Rührbehälter von 200 Litern ein Volumen von etwa 50 Liter Kühlwasser um ein rasches Abkühlen zu ermöglichen. Das Rühraggregat bestand aus einem langsam drehenden Ankerrührwerk, einstellbar auf eine Umdrehungszahl von 1 - 85 U/min. Das Rühraggregat wurde durch einen 2,2 KW Getriebemotor angetrieben.

Um die einzelnen Veränderungen und Zustände zu beobachten, wurde ein Rührbehälter mit Sichtfenster und mit Beleuchtung gewählt.

### Heizaggregat zum Heizen des Reaktormantels:

Das Heizaggregat bestand aus einem Durchlauferhitzer mit einer Leistung von 21 KW und einer Durchflussmenge von 40 1/min.

### Kühlaggregat zum Kühlen des Reaktormantels:

Das Kühlaggregat bestand aus einem Durchlaufkühler mit einer Kühlleistung von 25 KW und einem Kaltwasserspeicher von 125 Liter um ein sehr rasches Herunterkühlen des Reaktormediums zu ermöglichen.

### Vakuumpumpe:

Gewählt wurde eine Vakuumpumpe, welche auf Druckluftbasis mit einem Venturisystem arbeitet. Dadurch ist ein sehr großes (luftmengenbezogen) und ein sehr hohes Vakuumniveau etwa 70 mbar zu erreichen.

### Inlinehomogenisator und/oder Kugelmühle:

Eingesetzt wurden ein Inlinehomogenisator mit Zuführungseingang für Pulver, z.B. ein Dispergierapparat der Fa. Ystral GmbH, Wettelbrunner Str. 7, D-79282 Ballrechten-Dottingen, des Typs Conti TDS 2, mit einer Leistung von 5,5 - 6,5 KW, einer Arbeitsdrehzahl von 6000 U/min, einer Arbeitstemperatur von max 70°C und für eine maximale Konzentration nichtlöslicher Feststoffe von 60%, oder eine Nanomühle/Kugelmühle, z.B. Nanomühle ZETA® RS der Firma Netzsch. Auch geeignet wäre eine Ringspaltkugelmühle MS 18 oder MS 32 oder MS 50 der Firma FrymaKoruma.

### Eingesetztes Material:

30.9 Gew.-% Wasser demineralisiert < 10 µS Leitfähigkeit
19,6 Gew.-% Glycerin (wasserfrei)
48.2 Gew.-% SiO₂ Pulver BET 50-60 m2/g Primärteilchen 40 nm
0,5 Gew.-% KOH (50 Gew.-% mit Wasser demineralisiert < 10 µS Leitfähigkeit)
0,8 Gew.-% Polydimethylsiloxan

### Verfabrensbeschreibung:

Wasser, Glycerin, Siloxan und KOH wurden im Mischbehälter vorgelegt; es ergab sich ein pH Wert von > 10,5. Der Behälter wurde auf 40°C geheizt. Die Mischung wurde bei 50 U/min. während etwa 10 min gerührt. Dann wurde die Flüssigkeitsphase unter Rühren über einen Dispergierapparat im Kreislauf gepumpt. Dabei erfolgte die Zugabe von SiO₂. Diese Zugabe erfolgte kontinuierlich über einen Inlinehomogenisator oder eine Nanomühle/Kugelmühle, derart, dass durch einen Seitenkanal kontinuierlich Pulver in den Flüssigkeitsstrom gezogen und mit dem Dispergiermittel (Dispergierwerkzeug im Homogenisator oder Kugeln) unter Zermahlen eindispergiert wurde. Nach dem Eintrag der kompletten Pulvermenge wurde noch weiter im Kreislauf dispergiert/gemahlen, bis die kleinstmögliche Partikelgrösse erreicht wurde. Während des Eindispergierens erfolgte Zunahme der Stromaufnahme des Dispergiergerätes und Anstieg der Temperatur. Die Temperatur wurde durch Kühlen auf etwa 40°C gehalten. Die Stromaufnahme wurde bei ca. 35 A konstant, was als Mass für eine homogene Dispersion genommen wurde. Die Masse wurde anschliessend 2 h unter Vakuum bei 40 °C mit 5 U/min gerührt. Anschliessend wurde der Reaktor auf 20 °C hinuntergekühlt und - falls notwendig - der pH Wert mit KOH auf etwa 10,5 - 10,9 eingestellt. Die Dispersion wurde unter Filtration durch einen 100 µm Beutelfilter in 1000 l Kunststoffgebinde, insbesondere IBC, abgefüllt.

Eine Probe wurde als Rückstellmuster und für die Analytik entnommen und der Rührbehälter wurde gesäubert.

### Beispiel 3

### Herstellung einer Schutzschicht aus der Dispersion, hergestellt gemäss Beispiel 2

Die oben beschriebene Dispersion wurde mit KOH (50 Gew.-% in demineralisiertem Wasser einer leitfähigkeit von < 10 µS) vermischt unter Bildung einer Schutzschichtdispersion der Zusammensetzung:

| | |
|---|---|
| SiO₂: | 34.52 Gew.-% |
| H₂O: | 36.99 Gew.-% |
| Glycerin: | 14.39 Gew.-% |
| KOH: | 13.71 Gew.-% |
| Dimethylpolysiloxan: | 0.58 Gew.-% |

### Betriebsmittel (siehe auch Beispiel 2):

### Rührbehälter Vakuumfest mit einem Kühl/Heizmantel

Heizaggregat zum Heizen des Reaktormantels

Kühlaggregat zum Kühlen des Reaktormantels

Vakuumpumpe, die < 100 mbar Vakuum erzeugen kann

### Eingesetztes Material:

Dispersion gemäss Beispiel 2

### Kalilauge bestehend aus:

50 % KOH

50 % Wasser demineralisiert < 10 µS

### Verfahrensabeschreibung:

73.45 Gew.-% Dispersion wurden vorgelegt und das Rührwerk wurde eingeschaltet und auf etwa 50 U/min eingestellt. 26.55 Gew.-% Kalilauge wurden zugegeben. Der Reaktorinhalt reagierte unter Rühren und Temperaturanstieg zu einer hochviskosen, cremigen Masse. Nach etwa 15 min (gegebenenfalls unter Heizen) wurde ein Temperaturmaximum von 45 bis 50°C erreicht. Die Viskosität sank dann innert 15 bis 45 Minuten auf ca. 50 mPas. Der Reaktor wurde auf 40-45°C gekühlt, vakuumdicht gemacht und ein Vakuum von etwa 50 bis 90 mbar absolut angelegt. Die Temperatur wurde auf Siedetemperatur, im angegebenen Vakuumbereich ca. 40 bis 45°C, gehalten, damit die Mischung siedet und Luftblasen heftig an die Oberfläche getrieben werden und zerplatzen. Die Rührgeschwindigkeit betrug 5 U/min. Nach etwa 30 bis 45 min wurde die Mischung sehr schnell gekühlt, um die Verfestigungsreaktion zu verlangsamen und somit eine Verarbeitungsdauer von 3 h zu erreichen. Das Vakuum wurde noch 60-90 min beibehalten um Blasenfreiheit zu gewährleisten. Danach wurde die Mischung zum Verfüllen von Feuerschutzelementen benutzt.

### Brandversuche:

Mit dieser Schutzschicht wurden Gläser für Brandversuche in den Abmessungen 120 cm x 220 cm und im Scheibenaufbau 5 mm ESG/6mm Schutzschicht/5 mm ESG hergestellt. Nach EN 1363 bzw. 1364 wurde eine Feuerwiderstandszeit von 39 Minuten und damit eine Klassifikation EI 30 erreicht.

### Beispiel 4:

Weiteres Verfahren zur Herstellung einer erfindungsgemässen Brandschutzschicht aus Fällungskieselsäure

### Betriebsmittel:

Gleich wie in Beispiel 2 bzw. 3

### Eingesetztes Material:

### a) Kieselsäuredispersion bestehend aus:

47 Gew.-% (fest) SiO₂

19,6 Gew.-% Glycerin

0,5 Gew.-% Siloxan

0,6 Gew.-% KOH

32,3 Gew.-% Wasser demineralisiert heitwert < 10 µS

### b) Kalilauge bestehend aus:

50 Gew.-% KOH

50 Gew.-% Wasser demineralisiert < 10 µS

### Verfahrensanleitung:

Es wurde eine Mischung aus 73,45% SiO₂ Dispersion vorgelegt. Das Rührwerk wurde eingeschaltet und auf etwa 50 U/min eingestellt. Dann wurden 26,55% Kalilauge 50%ig zugegeben (Dauer etwa 5 min). Das SiO₂ und die Kalilauge reagieren unter Rühren zu einer hochviskosen Creme. Nach etwa 15 min sollte ein Temperaturmaximum von etwa 50 - 60 °C erreicht sein. Wurde diese Temperatur nicht durch die Exothermie des Mischvorgangs erreicht, so wurde geheizt. Die Viskosität sank innert dieses Zeitintervalls resp. bei dieser Temperatur auf etwa 50 mPas. Nach etwa 15-45 min und Erreichen des Temperaturmaximum wurde auf 40 - 45 °C gekühlt.

Darauf wurde der Reaktor vakuumdicht gemacht und die Vakuumpumpe eingeschalten. Bei einem Druck von 50 bis 90 mbar, einer Rührgeschwindigkeit von 5 U/min und bei einer Temperatur von 40 - 45°C wurde der Reaktorinhalt während 15 - 45 min am Sieden gehalten, so dass die im Material befindliche Luft mittels Gasblasen ausgetrieben wurde. Dabei wurde beobachtet, dass die Gasblasen heftig an die Oberfläche getrieben wurden und zerplatzen.

Nach etwa 15 - 45 min wurde der Reaktor mit Kühlwasser so schnell wie möglich auf 20 - 25 °C gekühlt, damit die verfestigende Reaktion verlangsamt und eine Verarbeitungsdauer von 3 h erreicht wurde. Das Vakuum wurde noch während etwa 60-90 min bei einer Temperatur von 20-25 °C und einer Rührgeschwindigkeit von 5 U/min beibehalten, um Blasenfreiheit zu gewährleisten. Danach wurde zuerst das Rührwerk, dann die Vakuumpumpe ausgeschaltet und der Reaktor entlüftet. Der Reaktor wurde entleert und gesäubert.

Die derart erhaltene Mischung eignete sich gut zum Verfüllen von Feuerschutzelementen.

### Brandversuche:

Mit dieser Schutzschicht wurden Gläser für Brandversuche in den Abmessungen 120 cm x 220 cm und im Scheibenaufbau 5 mm ESG/6mm Schutzschicht/5 mm ESG hergestellt. Nach EN 1363 bzw. 1364 wurde eine Feuerwiderstandszeit von 37 Minuten und damit eine Klassifikation EI 30 erreicht.

### Beispiel 5

Weiteres Verfahren zur Herstellung einer erfindungsgemässen Brandschutzschicht aus Fällungskieselsäure und mit Zusatz von Ammoniak

### Betriebsmittel:

Gleich wie in Beipiel 2

### Eingesetztes Material:

### Kieselsäuredispersion bestehend aus :

47 % (Feststoffgehalt) SiO₂

19,6 % Glycerin

0,5 % PDMS

0,6 % KOH

32,3 % Wasser demineralisiert Leitwert <10 µS

### Kalilauge bestehend aus:

50 % KOH

50 % Wasser demineralisiert < 10 µS

### Ammoniaklösung (NH₄0H) bestehend aus:

32 % NH₃

68 % Wasser demineralisiert < 10 µS

### Verfahrenbesichreibung:

Es wurde eine Mischung aus 73 Gew.-% SiO₂ Dispersion und 0.5 Gew.-% Ammoniaklösung 32%ig in einem Reaktor vorgelegt und das Rührwerk eingeschaltet und auf ca. 50 U/min einjustiert. Dann wurden 26.5 Gew.-% Kalilauge 50%ig zugegeben. Diese Mischung reagierte unter Rühren zu einer hochviskosen Creme. Nach etwa 15 min wurde ein Temperaturmaximum von etwa 45 - 50°C erreicht. Unter Heizen wurde die Mischung auf 50 - 60°C gebracht; die Viskosität sank auf etwa 50 mPas. Dieser Vorgang von Mischen und Heizen ohne Vakuum sollte etwa 15 - 45 min dauern. Anschliessend wurde auf 40 bis 45°C gekühlt und dann ein Vakuum von etwa 50 - 90 mbar abs. angelegt und die Temperatur bei einer Rührgeschwindigkeit von 10 U/min auf 42 - 45 °C während 15 - 30 min gehalten, damit die Mischung siedete und Luftblasen heftig an die Oberfläche getrieben wurden und zerplatzen. Die Viskosität stieg langsam wieder an. Danach wurde die Mischung sehr schnell auf 20 -25°C gekühlt, um die Aushärtungsreaktion zu verlangsamen und eine Verarbeitungsdauer von 3 h zu erreichen. Das Vakuum wurde noch etwa 60 min bei einer Rührgeschwindigkeit von 5 U/min beibehalten, um Blasenfreiheit zu gewährleisten. Die Viskosität betrug nun ca. 150 - 250 mPas, stieg aber im Laufe der Zeit langsam an. Die Mischung war zum Verfüllen von Feuerschutzelementen geeignet.

### Ergebnis

Überraschenderweise wurde gefunden, dass durch die Zugabe von Ammoniaklösung nach Anlegen eines Vakuums weniger Blasen an der Oberfläche der Mischung zu beobachten waren und dass das Sieden weniger heftig ausfiel, als bei den Mischungen ohne Ammoniakzugabe. Damit verkürzt sich die Prozessdauer und die Wirtschaftlichkeit wird erhöht bei gleichzeitig verbesserter Optik.

### Brandversuche:

Mit dieser Schutzschicht wurden Gläser für Brandversuche in den Abmessungen 120 cm x 220 cm und im Scheibenaufbau 5 mm ESG/6mm Schutzschicht/5 mm ESG hergestellt. Nach EN 1363 bzw. 1364 wurde eine Feuerwiderstandszeit von 38 Minuten und damit eine Klassifikation EI 30 erreicht.

### Beispiel 6:

Herstellung einer Schutzschicht unter Verwendung eines Kieselsols.

### Betriebsmittel:

500 ml Rundkolben, bestückt mit einem Magnetrührer als Reaktionsgefäss.

Heiz- und kühlbares Wasserbad.

Glasdurchlaufkühler, befestigt am Rundkolben und mit einem 500 ml Rundkolben als Auffanggefäß versehen.

Vakuumpumpe, angeschlossen am Reaktionsrundkolben.

Die eingesetzte Vakuumpumpe funktionierte auf Druckluftbasis mit einem Venturisystem, dadurch würde ein sehr großes (luftmengenbezogen) und ein sehr hohes Vakuumniveau von etwa 70 mbar realisiert.

### Eingesetztes Material:

### Kieselsol bestehend aus:

50 Gew.-% (Feststoffgehalt) SiO₂ BET 50 m²/g und eine Primärteilchengröße von 55 nm

50 Gew.-% Wasser demineralisiert Leitwert < 10 µS,

beispielsweise erhältlich von der Fa Obermeier unter dem Namen Levasil 50/50

### Kalilauge bestehend aus:

50 Gew.-% KOH

50 Gew.-% Wasser demineralisiert < 10 µS

### Siloxan:

Polydimetylsiloxan (PDMS), wässrige Emulsion 50/50 (d.h. 50 Gew.-% Polydimethylsiloxan und 50 Gew.-% Wasser)

### Polyol:

Glycerin

### Vorgehensweise:

Es wurden 100 Gew.-% Kieselsol mit 50 Gew.-% SiO₂-Gehalt vorgelegt. Diesem wurden 0.5 Gew.-% PDMS-Emulsion und 19.6% Glycerin (wasserfrei) zugegeben. Ein Magnetrührer wurde eingeschaltet und es wurde etwa 5 min gerührt, um eine homogene Flüssigkeit zu erhalten. Mit einem Wasserbad wurde unter Rühren auf etwa 45 - 50 °C aufgeheizt, die Vakuumpumpe wurde eingeschaltet und ein Vakuum von 50 - 90 mbar erzeugt. Der Mischung werden dann unter Vakuum durch Sieden 17.1 Gew.-% Wasser entzogen. Der Wasserentzug wurde dadurch bestimmt, dass der entstehende Wasserdampf im Rücklaufkühler kondensiert und als Wasser in einem Rundkolben aufgefangen wurde. Die Vakuumpumpe wurde ausgeschaltet und das Reaktionsgefäss entlüftet. Der Rücklaufkühler wurde entfernt und der Reaktionskolben unter Rühren bis auf 20 - 25 °C hinuntergekühlt.

Es wurden 73.45 Gew.-% der Kieselsol/Entschäumer/Glycerin-Mischung in einem Rundkolben vorgelegt und 26.55 Gew.-% Kalilauge wurden zugegeben und gerührt. Die Kieselsäure-haltige Mischung und die Kalilauge reagierten unter Rühren zu einer hochviskosen Creme. Nach etwa 15 min war ein Temperaturmaximum von etwa 45 - 50 °C erreicht. Unter Heizen wurde die Mischung auf 50 - 60 °C gebracht und die Viskosität sank nach etwa 15 - 30 min auf etwa 50 mPas. Dieser Vorgang von Mischen und Heizen ohne Vakuum sollte etwa 15 - 45 min dauern. Anschliessend wurde bei einer Rührgeschwindigkeit von etwa 10 U/min auf 40 - 45 °C gekühlt, der Reaktionskolben vakuumdicht gemacht und die Vakuumpumpe eingeschaltet (Leistung < 100 mbar). Die Temperatur von 40 - 45 °C wurde bei einem Vakuum von etwa 50 -90 mbar während 15 - 30 min gehalten, damit der Reaktorinhalt siedete und die im Material befindliche Luft mittels Gasblasen ausgetrieben wurde. Es wurde festgestellt, dass unter diesen Bedingungen Gasblasen heftig an die Oberfläche getrieben wurden und zerplatzten. Danach wurde die Mischung im Reaktionskolben im Wasserbad sehr schnell auf 20 - 25°C heruntergekühlt, damit die Reaktion zum Alkalisilikat verlangsamt und eine Verarbeitungsdauer von 3 h erreicht wurde. Das Vakuum wurde bei 20-25°C noch etwa 60 min beibehalten, um Blasenfreiheit zu gewährleisten. Die Viskosität stieg wieder an auf etwa 150 - 250 mPas. Der Rührer wurde ausgeschaltet, die Vakuumpumpe wurde ausschaltet und der Reaktionskolben entlüftet.

Eine derart hergestellte Mischung war zum Verfüllen von Feuerschutzelementen geeignet. Die Anfangsviskosität von 150 - 250 mPas stieg im Laufe der Zeit langsam an.

Diese Resultate wurden in einem 20 Liter-Reaktor bestätigt und eine Musterscheibe in den Abmessungen 50 cm x 50 cm für Brandversuche wurde hergestellt.

### Brandversuche:

Mit dieser Musterscheibe in den Abmessungen 50 cm x 50 cm und im Scheibenaufbau 5 mm ESG/6mm Schutzschicht/5 mm ESG wurde ein Brandversuch nach EN 1363 bzw. 1364 durchgeführt. Für diese kleinen Scheiben wurde eine Feuerwiderstandszeit von 40 Minuten erreicht. Das entspricht einer Klassifikation EI 30.

### Beispiel 7:

Herstellung einer SiO₂ Dispersion aus gefällter Kieselsäure, Wasser, Glycerin, KOH, Kieselsol und Polydimetyloxan.

### Betriebsmittel:

(siehe Beispiele 2 und 3)

### Beispiel 7A:

Herstellung einer Siliziumdioxiddispersion enthaltend gefällte Kieselsäure

### Eingesetztes Material:

32,3 Gew.-% Wasser demineralisiert < 10 µS Leitfähigkeit

19,6 Gew.-% Glycerin (wasserfrei)

47,0 Gew.-% SiO₂-Pulver BET 50-60 m²/g; Primärteilchen durchschnittlich ca. 40 nm

0,6 Gew.-% KOH

0,5 Gew.-% Entschäumer (Polydimethylsiloxan)

### Verfahrensbeschrueibung:

In einem sauberen Rührbehälter wurden Wasser, Glycerin, Entschäumer und KOH vorgelegt. Es ergab sich ein pH Wert von > 10,5. Die vorgelegte Mischung wurde bei 50 U/min. während etwa 10 min. gerührt. Darauf wurde Zugabe von SiO₂ über einen Inlinehomogenisator oder eine Nanomühle/Kugelmühle gestartet und kontinuierlich weitergeführt, währenddem die Mischung im Kreislauf gepumpt wurde. Die Stromaufnahme des Dispergiergerätes stieg bis auf etwa 35 A und auch die Temperatur stieg durch den Energieeintrag. Deshalb wurde die Reaktortemperatur durch Kühlen auf etwa 40°C gehalten. Das Material wurde im Kreislauf über den Dispergierer geführt, bis die Stromaufnahme konstant war. Anschliessend wurde während 2 h unter Vakuum bei 40 °C mit 5 U/min gerührt und der Reaktor anschliessend auf 20°C runtergekühlt. Der pH wurde - sofern notwendig - mittels KOH auf etwa 10,5 - 10,9 eingestellt.

Falls gewünscht kann das Produkt unter Filtration mit 100 µm Beutelfilter in Vorratsbehälter abgefüll werden. Sinnvollerweise wird eine Probe als Rückstellmuster und für die Analytik entnommen.

Der geleerte Rührbehälter wird vorzugsweise unverzüglich gesäubert.

### Beispiel 7B:

Herstellung eines gestrippten mit Glycerin versetzten Kieselsols

### Eingesetztes Material

100 % Kieselsol (Levasil 50/50 der Firma mit einem BET von 50 m²/g und eine mittleren Primärteilchengröße von 55 nm) bezogen auf die 100 % Solvorlage:

19,6 % Glycerin (> 99,9 % techn. rein)

0,5 % Entschäumer (Polydimetylsiloxan)

### Verfahrensbeschreibung:

Kieselsol (Levasil 50/50), Glycerin und Polydimetylsiloxan wurden in sauberem Rührbehälter bzw. Reaktor vorgelegt, dieser auf 60-70°C aufgeheizt und die Mischung mit 50 U/min während etwa 15 min. gerührt. Anschliessend wurden der Reaktor und die Kolonne unter Vakuum gesetzt (vorzugsweise < 100 mbar). Die Destillationskolonne wurde ohne Rücklaufverhältnis eingestellt und 17,1 % Wasser, bezogen auf die Solvorlage, abgedampft. Das Vakuum wurde abgestellt, der Reaktor entspannt und auf 20 °C gekühlt.

Der pH wurde - sofern notwendig - mittels KOH auf etwa 10,5 - 10,9 eingestellt. Sinnvollerweise wird eine Probe als Rückstellmuster und für die Analytik entnommen.

Falls gewünscht kann das Produkt unter Filtration mit 50 µm Beutelfilter in Vorratsbehälter abgefüll werden oder direkt im Reaktor verbleiben zur direkten Verarbeitung (siehe Beispiel 7C).

Falls der Rührbehälter geleert wird, wird er vorzugsweise unverzüglich gesäubert.

### Beispiel 7C:

Herstellung einer Kieselsol und Fällungskieselsäure enthaltenden Dispersion der Zusammensetzung 47.0% SiO₂, 19.6% Glycerin

### Eingesetzte Materialien:

50 % modifiziertes Kieselsol gemäss Beispiel 7B

50 % Kieselsäuredispersion gemäss Beispiel 7A

### Verfahrensbeschreibung:

Das gemäss Beispiel 7B hergestellte, modifizierte Kieselsol und die gemäss Beispiel 7A hergestellte Kieselsäuredispersion wurden im Rührbehälter vorgelegt und unter Rühren mit 50 U/min während 1 h im Kreislauf über den Dispergierapparat geführt. Die Temperatur wurde auf ca. 40°C gehalten.

Vorzugsweise wird eine Probe als Rückstellmuster und für die Analytik entnommen.

Die Dispersion wurde unter Filtration durch 50 µm Beutelfilter in einen Vorratsbehälter, z.B. einen IBC Container, gefüllt.

### Beispiel 7D: Herstellung von Brandschutzgläsern aus einer Mischung gemäss Beispiel 7C

### Eingesetzte Materialien:

Kieselsäuredispersion gemäss Beispiel 7A und modifiziertes Kieselsol gemäss Beispiel 7B wie in Tabelle 2 spezifiziert und je enthaltend 0.5 Gew.-% PDMS

7.4 kg KOH (50 Gew.-% in Wasser)

### Verfahrensbeschreibung:

Wie in Beispiel 7C beschrieben wurden entsprechend Tabelle 2 weitere Mischungen mit unterschiedlichen Verhältnissen von Fällungskieselsäuredispersion (Dispersion) zu Kieselsol hergestellt und nach Zugabe der 7.4 kg KOH für die Herstellung von Schutzschichten bzw. Brandschutzgläsern (Brandversuchsscheibe des Typs EI 30 120 x 220 cm 5mm ESG 6mm IL) verwendet.

Es wurde kein weiteres Wasser zugegeben. Die Aushärtung erfolgte während 8 h bei 80°C. Die visuelle Beurteilung der ausgehärteten Gläser und die Resultate der Brandversuche sind in Tabelle 2 zusammengefasst.

**Tabelle 2:**

| | | | | |
|---|---|---|---|---|
| **Dispersion** | 0.0 kg = 0% | 4.85 kg = 25 % | 9.75 kg = 50 % | 14.55 kg = 75 % |
| **Kieselsol** | 19.5 kg =100% | 14.55kg = 75 % | 9.75 kg = 50 % | 7.85kg=25% |
| **Startemperatur** | 19.8°C | 20,7°C | 19.2°C | 19.2°C |
| **Ergebnis** | OK keine Blasen | OK keine Blasen | OK keine Blasen | OK kleine Blasen verschwinden nach 3-5 Tagen |
| | sehr gut füllbar | sehr gut füllbar | sehr gut füllbar | sehr gut füllbar |
| | Topfzeit 6 h | Topfzeit 5.5 h | Topfzeit 5 h | Topfzeit 4 h |
| **Feuerwiderstandszeit** | 15 Min. | 30 Min. | 33 Min. | 34 Min. |

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Herstellung einer Schutzschicht von lichtdurchlässigen Hitzeschutzelementen, **dadurch gekennzeichnet, dass**
(a)eine mit Glycerin und/oder Ethylenglycol und KOH stabilisierte SiO₂-Dispersion aus
(i) Fällungskieselsäure oder
(ii) pyrogener Kieselsäure und/oder Fällungskieselsäure und Kiceslsol und
(b) Kalilauge
miteinander vermischt werden.

2. Verfahren gemäss Anspruch 1, **dadurch gekennzeichnet, dass** die mit Glycerin und KOH stabilisierte SiO₂-Dispersion eine Dispersion aus pyrogener Kieselsäure und/oder Fällungskieselsäure und Kieselsol ist.

3. Verfahren gemäss Anspruch 1 oder 2, **dadurch gekennzeichnet, dass** die SiO₂-Dispersion und/oder die Kalilauge Alkylsiloxan enthält, in Mengen, derart, dass die Gesamtmenge in der Schutzschicht 0.1 bis 10 Gew.-% beträgt, wobei das Alkylsiloxan ausgewählt ist aus Polymono- und Polydialkylsiloxanen und Mischungen derselben, und wobei die Alkylgruppen lineare und/oder verzweigte C1-C4-Alkylgruppen sind.

4. Verfahren gemäss Anspruch 3, **dadurch gekennzeichnet, dass** das Alkylsiloxan Polydimethylsiloxan ist.

5. Verfahren gemäss Anspruch 3 oder 4, **dadurch gekennzeichnet, dass** das Alkylsiloxan ein Molekulargewicht (Mw) im Bereich von 1000 bis 25000 aufweist.

6. Verfahren gemäss irgendeinem der vorangehenden Ansprüche, **dadurch gekennzeichnet, dass** die SiO₂-Dispersion und/oder die Kalilauge Ammoniak enthalten, in einer Menge, welche insgesamt einer Menge von 0.1 bis 6 Gew.-% einer 32 Gew.-%igen wässrigen Ammoniaklösung entspricht, insbesondere 0.5 bis 2.5 Gew.-% einer 32 Gew.-%igen wässrigen Ammoniaklösung.

7. Verfahren gemäss irgend einem der vorangehenden Ansprüche, **dadurch gekennzeichnet, dass** die SiO₂-Dispersion eine Dispersion aus Fällungskieselsäure und Kieselsol ist.

8. Verfahren gemäss irgendeinem der vorangehenden Ansprüche, **dadurch gekennzeichnet, dass** die SiO₂-Dispersion folgende Zusammensetzung aufweist:
35-52 Gew.-% SiO₂
30-50 Gew.-% Wasser
0.6 + 0.1 Gew.% KOH
0-13 Gew.-% Alkylsiloxan
Rest Glycerin und/oder Ethylenglykol, wobei mindestens 5 Gew.-% Glycerin und/oder Ethylenglykol enthalten sind, und wobei das Alkylsiloxan ausgewählt ist aus Polymono- und Polydialkylsiloxanen und Mischungen derselben, und wobei die Alkylgruppen lineare und/oder verzweigte C1-C4-Alkylgruppen sind.

9. Verfahren gemäss Anspruch 8, **dadurch gekennzeichnet, dass** die SiO₂-Dispersion folgende Zusammensetzung aufweist:
47.0 - 48.5 Gew.-% SiO₂
33.8 - 30.9 Gew.-% Wasser
0.6 ± 0.1 Gew.-% KOH
0-10 Gew.-% Alkylsiloxan
Rest Glycerin und/oder Ethylenglykol, wobei mindestens 5 Gew.-% Glycerin und/oder Ethylenglykol enthalten sind.

10. Verfahren gemäss Anspruch 8 oder 9, **dadurch gekennzeichnet, dass** die Dispersion 0.5 bis 0.8 Gew.-% Alkylsiloxan enthält.

11. Verfahren gemäss irgendeinem der vorangehenden Ansprüche, **dadurch gekennzeichnet, dass**
(a)die mit Glycerin und KOH stabilisierte SiO₂-Dispersion und
(b) Kalilauge
miteinander vermischt werden, in Mengen, welche 70 bis 75 Gew.-% Dispersion gemäss einem der Ansprüche 8 bis 10 und 25 bis 30 Gew.-% Kalilauge (50 Gew.-%) entsprechen, speziell bevorzugt in Mengen, welche 73,45 Gew.-% Dispersion gemäss einem der Ansprüche 8 bis 10 und 26,55 Gew.-% Kalilauge (50 Gew.-%) entsprechen.

12. Verwendung eines mit KOH und Polyol stabilisierten Kieselsols zur Herstellung einer Schutzschicht eines Hitzeschutzelements.

13. Siliziumdioxid enthaltende wässrige Dispersion, **dadurch gekennzeichnet, dass** sie (i) pyrogene Kieselsäure und/oder Fällungskieselsäure und (ii) Kieselsol enthält und dass sie durch Zusatz von Polyol und Alkalihydroxid, insbesondere Kaliumhydroxid, stabilisiert ist.

14. Verfahren zur Herstellung eines stabilen konzentrierten Kieselsols, **dadurch gekennzeichnet, dass** alkalisch stabilisiertes Kieselsol mit Polyol versetzt und anschliessend unter Verdampfung von Wasser aufkonzentriert wird.

15. Lichtdurchlässiges Hitzeschutzelement mit mindestens einem Trägerelement und einer Schutzschicht, **dadurch gekennzeichnet, dass** die Schutzschicht eine wasserhaltige Silikatzusammensetzung erhältlich aus Alkali-metalloxid und SiO₂ mittels des Verfahrens gemäss einem der Ansprüche 1 bis 11 ist.

## Claims

1. Method for producing a protection layer of translucent heat-protection elements, **characterised in that**
(a) a SiO₂-dispersion stabilized with glycerine and/or ethylene glycol and KOH of
(i) precipitated silica or
(ii) pyrogenic (fumed) silica and/or precipitated silica and silica sol and
(b) caustic potash
are mixed with one another.

2. Method according to claim 1, **characterized in that** the SiO₂-dispersion stabilized with glycerine and KOH is a dispersion of pyrogenic silica and/or precipitated silica and silica sol.

3. Method according to claim 1 or 2, **characterized in that** the SiO₂-dispersion and/or the caustic potash contains alkylsiloxane in such amounts that the entire amount in the protection layer is between 0.1 and 10 % by weight, the alkylsiloxane being chosen from polymonoalkylsiloxanes and polydialkylsiloxanes and their mixtures, wherein the alkyl groups are linear and/or branched C1-C4-alkyl groups.

4. Method according to claim 3, **characterized in that** the alkylsiloxane is polydimethylsiloxane.

5. Method according to claim 3 or 4, **characterized in that** the alkylsiloxane has a molecular weight (Mw) in the range of 1000 to 25000.

6. Method according to one of the preceding claims, **characterized in that** the SiO₂-dispersion and/or the caustic potash contains ammonia in an amount corresponding to an amount of 0.1 to 6 % by weight of a 32 % by weight aqueous ammonia solution, particularly 0.5 to 2.5 % of a 32 % by weight aqueous ammonia solution.

7. Method according to one of the preceding claims, **characterized in that** the SiO₂-dispersion is a dispersion of precipitated silica and silica sol.

8. Method according to one of the preceding claims, **characterized in that** the SiO₂-dispersion has the following composition:
35-52 % by weight SiO₂
30-50 % by weight water
0.6 ± 0.1 % by weight KOH
0-13 % by weight alkylsiloxane
the rest glycerine and/or ethylene glycol, wherein at least 5 % by weight glycerine and/or ethylene glycol are contained, and wherein the alkylsiloxane is chosen of polymonoalkylsiloxanes and polydialkylsiloxanes and their mixtures, and wherein the alkyl groups are linear and/or branched C1-C4-alkyl groups.

9. Method according to claim 8, **characterized in that** the SiO₂-dispersion has the following composition:
47.0-48.5 % by weight SiO₂
33.8-30.9 % by weight water
0.6 ± 0.1 % by weight KOH
0-10 % by weight alkylsiloxane
the rest glycerine and/or ethylene glycol, wherein at least 5 % by weight glycerine and/or ethylene glycol are contained.

10. Method according to claim 8 or 9, **characterized in that** the dispersion contains 0.5 to 0.8 % by weight alkylsiloxane .

11. Method according to one of the preceding claims, **characterized in that**
(a) the SiO₂-dispersion stabilized with glycerine and KOH and
(b) the caustic potash
are mixed with one another in amounts corresponding to 70 and 75 % by weight of a dispersion of one of the claims 8 to 10 and 25 and 30 % by weight of caustic potash (50 % by weight), particularly preferred in amounts corresponding to 73.45 % by weight of a dispersion of one of the claims 8 to 10 and 26.55 % by weight caustic potash (50 % by weight).

12. Use of a silica sol stabilized with KOH and polyol for producing a protection layer of a heat-protection element.

13. Aqueous dispersion containing silicon dioxide, **characterized in that** it contains (i) pyrogenic silica and/or precipitated silica and (ii) silica sol and **in that** it is stabilized by addition of polyol and alkaline hydroxide, particularly potassium hydroxide.

14. Method for producing a stable and concentrated silica sol, **characterized in that** polyol is added to an alkali-stabilized silica sol, whereafter it is concentrated by water evaporation.

15. Translucent heat-protection element with at least a carrier element and a protection layer, **characterized in that** the protection layer is an aqueous silicate composition, obtainable from alkali metal oxide and SiO₂ by the method according to one of the claims 1 to 11.

## Revendications

1. Méthode pour la fabrication d'une couche de protection des éléments translucides de protection thermique, **caractérisée en ce que**
(a) une SiO₂-dispersion stabilisée avec glycérine et/ou éthylène glycol et KOH de
(i) silice de précipitation ou
(ii) silice pyrogène et/ou silice de précipitation et sol de silice et
(b) lessive de potasse
sont mélangés l'un avec l'autre.

2. Méthode selon la revendication 1, **caractérisée en ce que** la SiO₂-dispersion stabilisée avec glycérine et KOH est une dispersion de silice pyrogène et/ou silice de précipitation et sol de silice.

3. Méthode selon la revendication 1 ou 2, **caractérisée en ce que** la SiO₂-dispersion et/ou la lessive de potasse contient de l'alkylsiloxane dans de quantités telles que la quantité entière dans la couche de protection est comprise entre 0.1 et 10 % en poids, l'alkylsiloxane étant choisi des polymonoalkylsiloxanes et polydialkylsiloxanes et leurs mélanges, et les groupes d'alkyle étant des C1-C9-groupes d'alkyle linéaires et/ou ramifiés.

4. Méthode selon la revendication 3, **caractérisée en ce que** l'alkylsiloxane est du polydiméthylsiloxane.

5. Méthode selon la revendication 3 ou 4, **caractérisée en ce que** l'alkylsiloxane a un poids moléculaire (Mw) compris entre 1000 et 25000.

6. Méthode selon l'une quelconque des revendications précédentes, **caractérisée en ce que** la SiO₂-dispersion et/ou la lessive de potasse contient de l'ammoniac dans une quantité correspondant à une quantité comprise entre 0.1 et 6 % en poids d'une solution d'ammoniac aqueuse de 32 % en poids, particulièrement comprise entre 0.5 et 2.5 % en poids d'une solution d'ammoniac aqueuse de 32 % en poids.

7. Méthode selon l'une quelconque des revendications précédentes, **caractérisée en ce que** la SiO₂-dispersion est une dispersion de silice de précipitation et sol de silice.

8. Méthode selon l'une quelconque des revendications précédentes, **caractérisée en ce que** la SiO₂-dispersio a la composition suivante:
35-52 % en poids du SiO₂
30-50 % en poids de l'eau
0.6 ± 0.1 % en poids du KOH
0-13 % en poids de l'alkylsiloxane
le reste de la glycérine et/ou de l'éthylène glycol, mais contenant au moins 5 % en poids glycérine et/ou éthylène glycol, et l'alkylsiloxane étant choisi des polymonoalkylsiloxanes et polydialkylsiloxanes et leurs mélanges, et les groupes d'alkyle étant des C1-C4-groupes d'alkyle linéaires et/ou ramifiés.

9. Méthode selon la revendication 8, **caractérisée en ce que** la SiO₂-dispersion a la composition suivante:
47.0-48.5 % en poids du SiO₂
33.8-30.9 % en poids de l'eau
0.6 ± 0.1 % en poids du KOH
0-10 % en poids de l'alkylsiloxane
le reste de la glycérine et/ou de l'éthylène glycol, mais contenant au moins 5 % en poids et/ou glycérine et/ou éthylène glycol.

10. Méthode selon la revendication 8 ou 9, **caractérisée en ce que** la dispersion contient de l'alkylsiloxane compris entre 0.5 et 0.8 % en poids.

11. Méthode selon l'une quelconque des revendications précédentes, **caractérisée en ce que**
(a) la SiO₂-dispersion stabilisée avec de la glycérine et du KOH et
(b) de la lessive de potasse
sont mélangés l'une avec l'autre dans des quantités correspondant à 70 et 75 % en poids d'une dispersion selon l'une des revendications 8 à 10 et de 25 et 30 % en poids de la lessive de potasse (50 % en poids), particulièrement préféré dans des quantités correspondant à 73.45 % en poids d'une dispersion selon l'une des revendications 8 à 10 et de 26.55 % en poids de la lessive de potasse(50 % en poids).

12. Usage d'un sol de silice stabilisé avec du KOH et du polyol pour la fabrication d'une couche de protection d'un élément de protection thermique.

13. Dispersion aqueuse contenant de l'oxyde de silicium, **caractérisée en ce qu'**elle contient (i) de silice pyrogène et/ou de silice de précipitation et (ii) du sol de silice et **en ce qu'**elle est stabilisée par une addition de polyol et de l'hydroxyde alcalin, particulièrement de l'hydroxyde de potassium.

14. Méthode pour la fabrication d'un sol de silice stable et concentré, **caractérisée en ce que** du polyol est ajouté au sol de silice stabilisé par voie alcaline, et ensuite concentré par évaporation d'eau.

15. Élément translucide de protection thermique avec au moins un élément support et une couche de protection, **caractérisé en ce que** la couche de protection est une composition de silicate contenant de l'eau et obtenable d'oxyde de métal alcalin et de SiO₂ à l'aide de la méthode selon l'une des revendications 1 à 11.
